# EUROPÄISCHE PATENTANMELDUNG

(11) **EP 3 937 283 A1**
(43) Veröffentlichungstag der Anmeldung: **12.01.2022**
(21) Anmeldenummer: 21180571.8
(22) Anmeldetag: 21.06.2021
(51) Int. Cl.: H01M 8/04014, H01M 8/04089, H01M 8/04701, H01M 8/04746, H01M 8/04828, H01M 8/0612, H01M 8/0662, H01M 8/12, H01M 8/1231, H01M 8/2425, H01M 8/124, H01M 8/14

(54) **HOCHTEMPERATURBRENNSTOFFZELLENVORRICHTUNG**

(30) Priorität: 07.07.2020 DE 102020208497
(71) Anmelder: Robert Bosch GmbH, 70442 Stuttgart (DE)
(72) Erfinder: Hering, Martin, 97532 Uechtelhausen (DE); Carre, Maxime, 70469 Stuttgart (DE); Wahl, Stefanie, 71691 Freiberg Am Neckar (DE)

(57) **Zusammenfassung**

Die Erfindung geht aus von einer Hochtemperaturbrennstoffzellenvorrichtung zu einem Betrieb zumindest einer Brennstoffzelleneinheit (12), insbesondere einer Festoxidbrennstoffzelleneinheit, mit zumindest einer Brennstoffversorgungseinheit (14), welche zumindest einen Zufuhrzweig (16) zu einer Versorgung der Brennstoffzelleneinheit (12) mit einem Brennstoff umfasst, welche zumindest einen in den Zufuhrzweig (16) mündenden Rückführzweig (18) zu einer Rückspeisung eines aus der Brennstoffzelleneinheit (12) austretenden Brennstoffrests umfasst und welche eine Flüssigkeitsabscheidereinheit (20) zu einer Abscheidung einer Flüssigkeit aus dem Brennstoff umfasst.

Es wird vorgeschlagen, dass die Flüssigkeitsabscheidereinheit (20) in einem von dem Zufuhrzweig (16) und dem Rückführzweig (18) gebildeten Brennstoffkreislauf eingebunden ist, wobei ein Flüssigkeitsauslass (22) der Flüssigkeitsabscheidereinheit (20) einen Auslass aus dem Brennstoffkreislauf bildet.

## Beschreibung

### Stand der Technik

Es ist bereits eine Hochtemperaturbrennstoffzellenvorrichtung zu einem Betrieb zumindest einer Brennstoffzelleneinheit, insbesondere einer Festoxidbrennstoffzelleneinheit, mit zumindest einer Brennstoffversorgungseinheit vorgeschlagen worden, welche zumindest einen Zufuhrzweig zu einer Versorgung der Brennstoffzelleneinheit mit einem Brennstoff umfasst, welche zumindest einen in den Zufuhrzweig mündenden Rückführzweig zu einer Rückspeisung eines aus der Brennstoffzelleneinheit austretenden Brennstoffrests umfasst und welche eine Flüssigkeitsabscheidereinheit zu einer Abscheidung einer Flüssigkeit aus dem Brennstoff umfasst.

### Offenbarung der Erfindung

Die Erfindung geht aus von einer Hochtemperaturbrennstoffzellenvorrichtung zu einem Betrieb zumindest einer Brennstoffzelleneinheit, insbesondere einer Festoxidbrennstoffzelleneinheit, mit zumindest einer Brennstoffversorgungseinheit, welche zumindest einen Zufuhrzweig zu einer Versorgung der Brennstoffzelleneinheit mit einem Brennstoff umfasst, welche zumindest einen in den Zufuhrzweig mündenden Rückführzweig zu einer Rückspeisung eines aus der Brennstoffzelleneinheit austretenden Brennstoffrests umfasst und welche eine Flüssigkeitsabscheidereinheit zu einer Abscheidung einer Flüssigkeit aus dem Brennstoff umfasst.

Es wird vorgeschlagen, dass die Flüssigkeitsabscheidereinheit in einem von dem Zufuhrzweig und dem Rückführzweig gebildeten Brennstoffkreislauf eingebunden ist, wobei ein Flüssigkeitsauslass der Flüssigkeitsabscheidereinheit einen Auslass aus dem Brennstoffkreislauf bildet. Unter einer "Brennstoffzelleneinheit" soll insbesondere eine Brennstoffzelle, ein Stack von Brennstoffzellen oder ein Verbund von Brennstoffzellenstacks verstanden werden. Vorzugsweise umfasst die Brennstoffzelleneinheit zumindest eine Hochtemperaturbrennstoffzelle, insbesondere ausschließlich Hochtemperaturbrennstoffzellen. Beispiele für eine Hochtemperaturbrennstoffzelle umfassen Festoxidbrennstoffzellen (SOFC) oder Schmelzkarbonatbrennstoffzellen (MCFC). Die Brennstoffzelleneinheit umfasst, insbesondere je Brennstoffzelle, zumindest eine Brennstoffelektrode, welche während eines Betriebs in direktem Kontakt mit dem Brennstoff steht, und zumindest eine Sauerstoffelektrode, welche während eines Betriebs in direktem Kontakt mit einem sauerstoffhaltigen Fluid steht. Die Brennstoffzelleneinheit ist zu einer Umsetzung des Brennstoffs und des sauerstoffhaltigen Fluids, insbesondere bei einer Betriebstemperatur von mehr als 350°C, vorgesehen. Unter "vorgesehen" soll insbesondere speziell eingerichtet, speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die Hochtemperaturbrennstoffzellenvorrichtung ist zu einer Handhabung eines Betriebsfluids der Brennstoffzelleneinheit vorgesehen. Insbesondere umfasst die Hochtemperaturbrennstoffzellenvorrichtung ein Leitungssystem, beispielsweise aus Rohren, Schläuchen, Schächten, Kanälen oder dergleichen, zu einer Führung der Betriebsfluide, wobei ein Zweig insbesondere einen zusammenhängenden Teilabschnitt einer Strömungsstrecke des Leitungssystems bezeichnet. Beispiele für Betriebsfluide umfassen insbesondere den Brennstoff, das sauerstoffhaltige Fluid, ein brennstoffseitiges Abgas der Brennstoffzelleneinheit und/oder ein sauerstoffseitiges Abgas der Brennstoffzelleneinheit. Vorzugsweise ist die Brennstoffversorgungseinheit in zumindest einem Betriebszustand zu einer Versorgung der Brennstoffzelleneinheit mit reinem Wasserstoff als Brennstoff vorgesehen. Unter einem "reinen" Stoff soll insbesondere ein Reinstoff oder ein Gemisch verstanden werden, in welchem der Stoff einen Stoffmengenanteil, Volumenanteil und/oder Massenanteil von mehr als 80 %, bevorzugt von mehr als 99 %, besonders bevorzugt von mehr als 99,99 %, überaus bevorzugt von mehr als 99,99999 % aufweist. Vorzugsweise ist die Brennstoffversorgungseinheit in zumindest einem weiteren Betriebszustand zu einer Versorgung der Brennstoffzelleneinheit mit einem reinen Kohlenwasserstoff, insbesondere Methan, Ethan, Propan, Butan oder dergleichen, einem Kohlenwasserstoffgemisch, insbesondere Erdgas, oder einem Kohlenstoff-Wasserstoffgemisch als Brennstoff vorgesehen. Das sauerstoffhaltige Fluid ist vorzugsweise Umgebungsluft. Alternativ ist das sauerstoffhaltige Fluid ein Industriegas mit definiertem Sauerstoffanteil, insbesondere reiner Sauerstoff. Das brennstoffseitige Abgas umfasst insbesondere ein Umsetzungsprodukt der Brennstoffzelleneinheit und/oder die Brennstoffreste. Das sauerstoffseitige Abgas weist gegenüber dem sauerstoffhaltigen Fluid stromaufwärts der Brennstoffzelleneinheit einen geringeren oder keinen Sauerstoffanteil auf. Die Brennstoffversorgungseinheit ist insbesondere zu einer Handhabung des Brennstoffs und/oder des brennstoffseitigen Abgases vorgesehen. Optional umfasst die Hochtemperaturbrennstoffzelleneinheit eine Sauerstoffversorgungseinheit, welche zu einer Handhabung des sauerstoffhaltigen Fluids und/oder des sauerstoffseitigen Abgases vorgesehen ist. Eine Handhabung eines der Betriebsfluide umfasst beispielsweise eine Übernahme des Betriebsfluids von einer Betriebsfluidquelle, eine Vorverarbeitung des Betriebsfluids vor einer Zufuhr zu der Brennstoffzelleneinheit, eine Nachbereitung des Betriebsfluids nach einer Abfuhr von der Brennstoffzelleneinheit, eine Entsorgung des Betriebsfluids, eine Temperierung des Betriebsfluids, eine Druckregulierung des Betriebsfluids, eine Feuchteregulierung des Betriebsfluids, eine Strömungsgeschwindigkeitsregulierung des Betriebsfluids, eine chemische Analyse des Betriebsfluids oder andere dem Fachmann sinnvoll erscheinende Maßnahmen zu einer Handhabung von Betriebsfluiden der Brennstoffzelleneinheit.

Vorzugsweise umfasst die Brennstoffversorgungseinheit zumindest eine Zufuhrfördereinheit in dem Zufuhrzweig, insbesondere außerhalb des Brennstoffkreislaufs, zu einer Einspeisung des Brennstoffs in den Brennstoffkreislauf. Eine "Fördereinheit" umfasst insbesondere zumindest eine Pumpe, einen Kompressor und/oder einen Ventilator zu einer Förderung eines der Betriebsfluide. Alternativ oder zusätzlich umfasst die Brennstoffversorgungseinheit zumindest ein Dosierelement, insbesondere ein Stellventil, zu einem Einlass des Brennstoffs aus einer extern mit Druck beaufschlagten Brennstoffquelle, beispielsweise einem Lagerbehälter und/oder einer externen Versorgungsleitung. Die Brennstoffversorgungseinheit umfasst insbesondere einen Brennstoffanschluss zu einer Übergabe des Brennstoffs an die Brennstoffzelleneinheit. Die Brennstoffversorgungseinheit umfasst vorzugsweise einen Abgasanschluss zu einer Übernahme des brennstoffseitigen Abgases von der Brennstoffzelleneinheit. Insbesondere erstreckt sich der Zufuhrzweig zumindest von der Zufuhrfördereinheit oder dem Dosierelement bis zu dem Brennstoffanschluss. Vorzugsweise erstreckt sich der Rückführzweig von dem Abgasanschluss bis zu einer Mündungsstelle des Rückführzweigs in den Zufuhrzweig. Die Mündungsstelle ist in dem Zufuhrzweig insbesondere stromabwärts der Zufuhrfördereinheit und/oder dem Dosierelement und insbesondere stromaufwärts des Brennstoffanschlusses angeordnet. Der Brennstoffkreislauf erstreckt sich insbesondere von der Mündungsstelle zum Brennstoffanschluss, durch die Brennstoffzelleneinheit hindurch und von dem Abgasanschluss zurück zur Mündungsstelle. Die Brennstoffversorgungseinheit umfasst eine Rückführfördereinheit zu einer Umwälzung des Brennstoffs und/oder des Abgases innerhalb des Brennstoffkreislaufs. Vorzugsweise ist die Rückführfördereinheit innerhalb des Brennstoffkreislaufs in dem Zufuhrzweig, alternativ in dem Rückführzweig, angeordnet. Besonders bevorzugt ist die Mündungsstelle in dem Zufuhrzweig stromaufwärts der Rückführfördereinheit angeordnet.

Die Flüssigkeitsabscheidereinheit ist dazu vorgesehen, den Brennstoff, insbesondere die Brennstoffreste, und das Umsetzungsprodukt zu trennen. Vorzugsweise ist die Flüssigkeitsabscheidereinheit dazu vorgesehen, das durch die Brennstoffzelleneinheit nicht weiter verwertbare Umsetzungsprodukt, insbesondere Wasser, aus dem Brennstoffkreislauf zu entfernen und den Brennstoff, insbesondere die Brennstoffreste, im Brennstoffkreislauf zu belassen. Die Flüssigkeitsabscheidereinheit kann in dem Zufuhrzweig stromabwärts der Mündungsstelle oder in dem Rückführzweig stromaufwärts der Mündungsstelle angeordnet sein. Die Flüssigkeitsabscheidereinheit weist einen Einlass zur Aufnahme des Brennstoffs oder des Abgases mit den Brennstoffresten auf. Die Flüssigkeitsabscheidereinheit weist einen Gasauslass und den Flüssigkeitsauslass auf. Vorzugsweise ist der Gasauslass in den Brennstoffkreislauf eingebunden. Der Flüssigkeitsauslass führt aus dem Brennstoffkreislauf hinaus.

Durch die erfindungsgemäße Ausgestaltung kann vorteilhaft eine Filterung des Brennstoffs und/oder des Abgases durchgeführt werden. Insbesondere kann ein vorteilhaft hoher Anteil an Restbrennstoff zu einem Umsetzen durch die Brennstoffzelleneinheit aus dem Abgas zurückgewonnen werden. Insbesondere kann eine vorteilhaft hohe Brennstoffnutzung erzielt werden. Insbesondere kann der Brennstoff einen vorteilhaft hohen Wasserstoffgehalt aufweisen. Ferner kann die Hochtemperaturbrennstoffzellenvorrichtung vorteilhaft zu einer Bereitstellung von de-ionisiertem Wasser genutzt werden.

Weiter wird vorgeschlagen, dass in zumindest einem aktiven Betriebszustand der Brennstoffversorgungseinheit der zumindest eine Flüssigkeitsauslass der Flüssigkeitsabscheidereinheit den einzigen Auslass aus dem Brennstoffkreislauf bildet. Der aktive Betriebszustand ist insbesondere zu einer Versorgung der Brennstoffzelleneinheit mit reinem Wasserstoff oder mit einem, insbesondere kohlenwasserstofffreien, Wasserstoff-Wasserdampf-Gemisch vorgesehen. Vorzugsweise ist der Abgasanschluss, insbesondere in dem zumindest einen aktiven Betriebszustand, verzweigungslos mit dem Einlass der Flüssigkeitsabscheidereinheit oder der Mündungsstelle verbunden. Optional weist der Rückführzweig eine Abzweigung auf, welche in dem aktiven Betriebszustand beispielsweise durch einen Blindflansch oder ein Sperrventil verschlossen ist. Es ist denkbar, dass die Flüssigkeitsabscheidereinheit mehrere Flüssigkeitsabscheider mit je einem eigenen Flüssigkeitsauslass umfasst. In diesem Fall bildet die Gesamtheit der Flüssigkeitsauslässe den einzigen Auslass aus dem Brennstoffkreislauf. Insbesondere führt jeder Strömungspfad in dem aktiven Betriebszustand, insbesondere von einer Undichtigkeit der Brennstoffversorgungseinheit abgesehen, der von dem Umsetzungsprodukt genommen werden kann, durch die Flüssigkeitsabscheidereinheit. Durch die erfindungsgemäße Ausgestaltung kann vorteilhaft eine im Wesentlichen vollständige Nutzung des Brennstoffs erreicht werden. Insbesondere wird der Brennstoff solange in dem Brennstoffkreislauf zirkuliert, bis er umgesetzt wurde und erst dann über die Flüssigkeitsabscheidereinheit aus dem Brennstoffkreislauf entnommen. Es kann eine vorteilhaft effiziente und vorteilhaft ressourcenschonende Hochtemperaturbrennstoffzellenvorrichtung bereitgestellt werden.

Ferner wird vorgeschlagen, dass die Flüssigkeitsabscheidereinheit in dem Brennstoffkreislauf zumindest einen betriebsfluidgekühlten Wärmeübertrager umfasst. Der Wärmeübertrager ist zu einer Kühlung des durch den Einlass der Flüssigkeitsabscheidereinheit eintretenden Betriebsfluids, insbesondere des brennstoffseitigen Abgases, vorgesehen. Insbesondere ist der Wärmeübertrager zu einem Kondensieren des Umsetzungsprodukts und optional zu einer Rückgewinnung von Wärme von dem Umsetzungsprodukt vorgesehen. Optional ist über einen Kondensationstemperaturregler der Flüssigkeitsabscheidereinheit an dem betriebsfluidgekühlten Wärmeübertrager eine Wasserdampfmenge, welche in den Zufuhrzweig rückgespeist wird, einstellbar. Vorzugsweise ist eine Kälteleitung des Wärmeübertragers Teil des Zufuhrzweigs und/oder an einen Sauerstoffzufuhrzweig der Sauerstoffversorgungseinheit angeschlossen, insbesondere zu einer Übertragung der Wärme von dem Umsetzungsprodukt auf den Zufuhrzweig und/oder den Sauerstoffzweig. Alternativ oder zusätzlich ist die Kälteleitung des Wärmeübertragers an einen Kühlkreislauf, insbesondere eine Wasserkühlung, angeschlossen. Durch die erfindungsgemäße Ausgestaltung kann eine vorteilhaft effektive Abscheidung des Umsetzungsprodukts als Flüssigkeit erreicht werden. Insbesondere kann die latente Wärme des Umsetzungsprodukts vorteilhaft genutzt werden. Ferner kann die Brennstoffzellenvorrichtung vorteilhaft energieeffizient betrieben werden.

Weiterhin wird vorgeschlagen, dass die Flüssigkeitsabscheidereinheit zwischen einer, insbesondere der bereits genannten, Mündungsstelle des Rückführzweigs in den Zufuhrzweig und einem brennstoffkreislaufinternen Wärmeübertrager in den Brennstoffkreislauf eingebunden ist. Der brennstoffkreislaufinterne Wärmeübertrager ist zu einer Wärmeübertragung von dem Abgas in den Rückführzweig auf den Brennstoff in dem Zufuhrzweig vorgesehen. Bevorzugt ist der brennstoffkreislaufinterne Wärmeübertrager, insbesondere unmittelbar, stromaufwärts des Brennstoffanschlusses in dem Zufuhrzweig angeordnet und, insbesondere unmittelbar, stromabwärts des Abgasanschlusses angeordnet. Unter "unmittelbar" angeordnet soll insbesondere ohne dazwischen liegende wärme- und/oder temperaturverändernde Bauteile angeordnet verstanden werden. Vorzugsweise umfasst die Hochtemperaturbrennstoffzellenvorrichtung zumindest eine wärmeisolierende Aufnahmeeinheit zu einer Aufnahme der Brennstoffzelleneinheit. Insbesondere sind der Brennstoffanschluss und der Abgasanschluss innerhalb der Aufnahmeeinheit angeordnet. Der brennstoffkreislaufinterne Wärmeübertrager ist insbesondere dazu vorgesehen, einen über die Betriebsfluide vermittelten Wärmeaustausch zwischen einem Inneren der Aufnahmeeinheit und einer Umgebung der Aufnahmeeinheit gering zu halten. Vorzugsweise ist der brennstoffkreislaufinterne Wärmeübertrager innerhalb der Aufnahmeeinheit angeordnet. Beispielsweise sind/ist die Zufuhrfördereinheit und/oder die Rückführfördereinheit außerhalb der Aufnahmeeinheit angeordnet. Die Flüssigkeitsabscheidereinheit kann in dem Zufuhrzweig stromaufwärts des brennstoffkreislaufinternen Wärmeübertragers oder in dem Rückführzweig stromabwärts des brennstoffkreislaufinternen Wärmeübertragers angeordnet sein. Vorzugsweise ist der Flüssigkeitsabscheider außerhalb der Aufnahmeeinheit angeordnet. Durch die erfindungsgemäße Ausgestaltung kann die Anzahl an Bauteilen, die innerhalb einer Hochtemperaturzone in der Aufnahmeeinheit angeordnet sind und dort betrieben werden müssen, vorteilhaft klein gehalten werden. Insbesondere kann ein Risiko eines vorzeitigen Verschleißes vorteilhaft gering gehalten werden. Ferner kann die Aufnahmeeinheit vorteilhaft kompakt gehalten werden. Insbesondere kann eine stabile Betriebstemperatur vorteilhaft schnell erreicht werden.

Des Weiteren wird vorgeschlagen, dass die Flüssigkeitsabscheidereinheit zwischen einem, insbesondere dem bereits genannten, brennstoffkreislaufinternen Wärmeübertrager der Brennstoffversorgungseinheit und einem Anschluss, insbesondere dem bereits genannten Brennstoffanschluss oder dem Abgasanschluss, zu einer Einbindung der Brennstoffzelleneinheit in den Brennstoffkreislauf eingebunden ist. Insbesondere ist die Flüssigkeitsabscheidereinheit zumindest teilweise innerhalb der Aufnahmeeinheit angeordnet. Optional ist die Flüssigkeitsabscheidereinheit in eine Wand der Aufnahmeeinheit eingelassen, sodass die Kälteleitung der Flüssigkeitsabscheidereinheit nicht durch einen Innenraum der Aufnahmeeinheit verläuft. Durch die erfindungsgemäße Ausgestaltung kann ein vorteilhaft großer Temperaturunterschied zwischen dem in den Einlass der Flüssigkeitsabscheidereinheit eintretenden Betriebsfluid und der Kälteleitung des Wärmeübertragers der Flüssigkeitsabscheidereinheit erreicht werden. Insbesondere kann ein Abscheiden des Umsetzungsprodukts vorteilhaft effektiv gestaltet werden.

Darüber hinaus wird vorgeschlagen, dass die Hochtemperaturbrennstoffzellenvorrichtung eine kohlenwasserstoffbetriebene Wasserstofferzeugereinheit zu einer Einspeisung von Wasserstoff in den Brennstoffkreislauf umfasst. Die an sich bekannte Wasserstofferzeugereinheit ist insbesondere dazu vorgesehen, Wasserstoff unter Nutzung eines kohlenwasserstoffhaltigen weiteren Brennstoffs, insbesondere Erdgas, zu erzeugen und diesen in den Brennstoffkreislauf einzuspeisen. Die Wasserstofferzeugereinheit umfasst zumindest einen Wasserstofferzeuger zu einer Dampfreformierung des weiteren Brennstoffs. Die Wasserstofferzeugereinheit umfasst zumindest eine Brennstofffördereinheit zu einer Förderung des weiteren Brennstoffs zu dem Wasserstoffgenerator, eine Luftfördereinheit zu einer Förderung von Umgebungsluft zu dem Wasserstoffgenerator und eine Wasserfördereinheit zu einer Förderung von Wasser zu dem Wasserstoffgenerator. Vorzugsweise ist die Wasserstofferzeugereinheit modular ausgebildet. Beispielsweise umfasst die Wasserstofferzeugereinheit ein Koppelelement zu einem lösbaren Anschließen eines Auslasses des Wasserstoffgenerators an den Zufuhrzweig. Vorzugsweise umfasst die Wasserstoffgeneratoreinheit eine, insbesondere eigenständige, Steuereinheit, mittels derer die Wasserstoffgeneratoreinheit unabhängig von der Brennstoffzelleneinheit betreibbar ist. Alternativ ist die Steuereinheit der Wasserstoffgeneratoreinheit in ein Steuersystem integriert, welches auch zu einer Steuerung der Brennstoffversorgungseinheit vorgesehen ist. Unter einer "Steuereinheit" oder einem "Steuersystem" soll insbesondere eine Einheit oder ein System mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Optional umfasst die Wasserstoffgeneratoreinheit zumindest ein Entnahmeelement, mittels dessen der generierte Wasserstoff aus der Hochtemperaturbrennstoffzellenvorrichtung entnehmbar ist. Vorzugsweise umfasst die Brennstoffversorgungseinheit eine Koppeleinheit mit zumindest zwei Koppelelementen zu einem Anschluss verschiedener Brennstoffquellen. Die Wasserstofferzeugereinheit kann zusätzlich oder alternativ zu einer als Versorgungsleitung oder als Lagerbehälter ausgebildeten Brennstoffquelle an den Zufuhrzweig angeschlossen sein. Vorzugsweise umfasst die Koppeleinheit eine Mischkammer und/oder ein Mehrwegeventil zu einer Mischung der Brennstoffe aus verschiedenen Brennstoffquellen und zu einer Einstellung eines Mischungsverhältnisses. Durch die erfindungsgemäße Ausgestaltung kann die Brennstoffzelleneinheit mit einer beliebigen Kombination von bereitgestelltem Wasserstoff und selbsterzeugtem Wasserstoff betrieben werden. Insbesondere kann die wasserstoffbetriebene Brennstoffzelleneinheit mittelbar über einen kohlenwasserstoffhaltigen Brennstoff versorgt werden. Insbesondere kann vorteilhaft eine beliebige Kombination von Wasserstoff und einem kohlenwasserstoffhaltigen Brennstoff, insbesondere Erdgas, als Energieträger mit einer einzelnen Vorrichtung genutzt werden. Ferner kann die Hochtemperaturbrennstoffzellenvorrichtung vorteilhaft einfach zu einer Verarbeitung verschiedener Brennstoffe umgerüstet werden.

Weiter wird vorgeschlagen, dass der Flüssigkeitsauslass der Flüssigkeitsabscheidereinheit an die Wasserstofferzeugereinheit angeschlossen ist. Der Flüssigkeitsauslass ist an die Wasserfördereinheit zu einer Versorgung des Wasserstofferzeugers angeschlossen. Alternativ oder zusätzlich umfasst die Wasserstofferzeugereinheit einen Wasseranschluss zu einem Anschließen der Wasserstofferzeugereinheit an eine externe Wasserquelle. Insbesondere bildet eine Leitungsstrecke von dem Wasserstofferzeuger über den Zufuhrzweig zu der Brennstoffelleneinheit, zumindest über den Rückführzweig zu der Wassersabscheidereinheit und zurück zu dem Wasserstofferzeuger einen Wasserstoffkreislauf. Optional umfasst die Wasserstofferzeugereinheit einen Sammelbehälter zu einer Zwischenspeicherung des von der Flüssigkeitsabscheidereinheit kommenden Wassers, der insbesondere zwischen dem Flüssigkeitsauslass und der Wasserfördereinheit angeordnet ist. Durch die erfindungsgemäße Ausgestaltung kann die Hochtemperaturbrennstoffzellenvorrichtung mit einer vorteilhaft geringen Menge an Wasser betrieben werden. Insbesondere kann auf eine Aufbereitung von Wasser aus einer externen Wasserquelle verzichtet werden. Ein Verschleiß durch von im Wasser gelösten oder mitgetragenen Zusatzstoffen kann vorteilhaft niedrig gehalten werden.

Ferner wird vorgeschlagen, dass die Hochtemperaturbrennstoffzellenvorrichtung eine Kohlenwasserstoffversorgungseinheit aufweist, welche in den Brennstoffkreislauf ein- und auskoppelbar ausgebildet ist und welche zumindest eine Einspeiseeinheit, einen Reformer und einen Nachbrenner umfasst. Wenn während eines regulären Betriebs der Hochtemperaturbrennstoffzellenvorrichtung die Kohlenwasserstoffversorgungseinheit in den Brennstoffkreislauf eingekoppelt ist, befindet sich die Brennstoffversorgungseinheit in einem aktiven Kohlenwasserstoffbetriebszustand. Wenn während eines regulären Betriebs der Hochtemperaturbrennstoffzellenvorrichtung die Kohlenwasserstoffversorgungseinheit aus dem Brennstoffkreislauf ausgekoppelt ist, befindet sich die Brennstoffversorgungseinheit in dem aktiven Betriebszustand. Die Kohlenwasserstoffversorgungseinheit ist zu einer Direkteinspeisung eines kohlenwasserstoffhaltigen Brennstoffs, insbesondere Erdgas, in den Zufuhrzweig vorgesehen. Vorzugsweise umfasst die Einspeiseeinheit zumindest eine weitere Brennstofffördereinheit und optional einen der weiteren Brennstofffördereinheit nachgeschalteten Entschwefler. Die Einspeiseeinheit ist vorzugsweise an der Koppeleinheit angeschlossen. Der Reformer ist vorzugsweise stromabwärts des brennstoffkreislaufinternen Wärmeübertragers und stromaufwärts des Brennstoffanschlusses eingekoppelt. Vorzugsweise ist der Nachbrenner stromabwärts des Abgasanschlusses und eines Sauerstoffabgasanschlusses der Sauerstoffversorgungseinheit und stromaufwärts eines Sauerstoffwärmeübertragers der Sauerstoffversorgungseinheit eingekoppelt. Vorzugsweise weist der Rückführzweig eine Verzweigung auf, aus welcher ein Abgaszweig abgezweigt ist. Vorzugsweise weist der Abgaszweig zumindest ein Sperrventil zu einem Schließen und Öffnen des Abgaszweigs auf. Insbesondere ist das Sperrventil zu einem Betrieb der Brennstoffzelleneinheit mit reinem Wasserstoff geschlossen. Insbesondere ist das Sperrventil zu einem Betrieb mit Kohlenwasserstoff oder einem Kohlenwasserstoff-Wasserstoff-Gemisch zumindest teilweise geöffnet. Die Flüssigkeitsabscheidereinheit ist beispielsweise stromabwärts der Rückführfördereinheit und stromaufwärts der Koppeleinheit angeordnet. Die Flüssigkeitsabscheidereinheit ist beispielsweise stromabwärts der Koppeleinheit und stromaufwärts des brennstoffkreislaufinternen Wärmeübertragers angeordnet. Die Flüssigkeitsabscheidereinheit ist beispielsweise stromabwärts des brennstoffkreislaufinternen Wärmeübertragers und stromaufwärts des Reformers angeordnet. Die Flüssigkeitsabscheidereinheit ist beispielsweise stromabwärts des Reformers und stromaufwärts des Brennstoffanschlusses angeordnet. Die Flüssigkeitsabscheidereinheit ist beispielsweise stromabwärts des Abgasanschlusses und stromaufwärts des brennstoffkreislaufinternen Wärmeübertragers angeordnet. Die Flüssigkeitsabscheidereinheit ist beispielsweise stromabwärts des brennstoffkreislaufinternen Wärmeübertragers und stromaufwärts der Rückführfördereinheit angeordnet. Durch die erfindungsgemäße Ausgestaltung kann eine Brennstoffzelleneinheit mit der Hochtemperaturbrennstoffzellenvorrichtung vorteilhaft mit verschiedenen Brennstoffen betrieben werden. Insbesondere kann die Hochtemperaturbrennstoffzellenvorrichtung vorteilhaft einfach zu einem Betrieb mit unterschiedlichen Brennstoffen umgerüstet werden.

Weiter wird vorgeschlagen, dass in zumindest einem, insbesondere dem bereits genannten, aktiven Kohlenwasserstoffbetriebszustand der Brennstoffversorgungseinheit der Brennstoffkreislauf zumindest einen weiteren Auslass aufweist, der von dem Flüssigkeitsauslass der Flüssigkeitsabscheidereinheit separat ausgebildet ist. Insbesondere wird der weitere Auslass von der Verzweigung gebildet und ist an den Nachbrenner angeschlossen. Durch die erfindungsgemäße Ausgestaltung kann eine vorteilhaft einfach zu kontrollierende und handhabbare Brennstoffzellenvorrichtung zur Verfügung gestellt werden, welche gleichzeitig eine vorteilhaft hohe Brennstoffnutzung erreichen kann.

Weiterhin wird vorgeschlagen, dass die Hochtemperaturbrennstoffzellenvorrichtung zumindest einen Wasserstoffbetrieb, zumindest einen Kohlenwasserstoffbetrieb und eine Stelleinheit zu einem, insbesondere kontinuierlichen, Wechsel zwischen dem Wasserstoffbetrieb und dem Kohlenwasserstoffbetrieb aufweist. In dem Wasserstoffbetrieb versorgt die Hochtemperaturbrennstoffzellenvorrichtung die Brennstoffzelleneinheit ausschließlich mit, insbesondere extern produziertem, reinem Wasserstoff und setzt insbesondere selbst keinen Brennstoff um. Insbesondere befindet sich die Brennstoffversorgungseinheit während des Wasserstoffbetriebs in dem aktiven Betriebszustand. In dem Kohlenwasserstoffbetrieb versorgt die Hochtemperaturbrennstoffzellenvorrichtung die Brennstoffzelleneinheit mit einem Kohlenwasserstoff oder einem Kohlenwasserstoffgemisch, insbesondere mit Erdgas, und/oder setzt diese selbst um, um die Brennstoffzelleneinheit mit selbstproduziertem Wasserstoff zu versorgen. Insbesondere befindet sich die Brennstoffversorgungseinheit während des Kohlenwasserstoffbetriebs in dem aktiven Betriebszustand, wenn sie die Brennstoffzelleneinheit mit selbstproduziertem Wasserstoff versorgt. Insbesondere befindet sich die Brennstoffversorgungseinheit während des Kohlenwasserstoffbetriebs in dem Kohlenwasserstoffbetriebszustand, wenn sie die Brennstoffzelleneinheit mit Kohlenwasserstoff oder einem Kohlenwasserstoffgemisch versorgt. Die Stelleinheit umfasst zu einer Einstellung von Brennstoffströmen aus verschiedenen Brennstoffquellen beispielsweise ein Mehrwegeventil, mehrere einzelne Dosierventile und/oder zumindest ein Steuerelement zu einer Koordination der Fördereinheiten. Vorzugsweise weist die Hochtemperaturbrennstoffzellenvorrichtung zumindest einen, von dem Wasserstoffbetrieb und dem Kohlenwasserstoffbetrieb unterschiedlichen, Mischbetrieb auf, in welchem die Brennstoffzelleneinheit mit extern produziertem Wasserstoff, selbstproduziertem Wasserstoff und/oder zumindest einem Kohlenwasserstoff in einem Mischungsverhältnis versorgt wird. Vorzugsweise ist die Stelleinheit dazu vorgesehen, das Mischungsverhältnis einzustellen. Vorzugsweise weist die Stelleinheit mehr als 10, bevorzugt mehr als 100, besonders bevorzugt mehr als 1000 unterschiedliche Einstellungen auf, um jeweils unterschiedliche Mischungsverhältnisse zu realisieren. Vorzugsweise ist das Mischungsverhältnis durch einen Benutzer einstellbar. Optional umfasst die Stelleinheit zumindest ein Regelelement zu einer automatischen Anpassung des Mischungsverhältnisses in Abhängigkeit von einer aktuellen Verfügbarkeit der jeweiligen Brennstoffe. Beispielsweise erhöht das Regelelement den Anteil selbstproduzierten Wasserstoffs und/oder eine Direkteinspeisung von Kohlenwasserstoffen über die Kohlenwasserstoffversorgungseinheit, wenn ein Wasserstofflagerbehälter sich leert und ein damit verbundener Druckabfall und/oder Volumenstromabfall von einem entsprechenden Sensorelement der Hochtemperaturbrennstoffzellenvorrichtung detektiert wird. Beispielsweise reduziert das Regelelement den Anteil an selbstproduziertem Wasserstoff und/oder eine Direkteinspeisung von Kohlenwasserstoffen über die Kohlenwasserstoffversorgungseinheit, wenn ein Wasserstofflagerbehälter, beispielsweise von einem solar- und/oder windbetriebenen Elektrolyseur, aufgefüllt wird und ein damit verbundener Druckanstieg und/oder Volumenstromanstieg von dem entsprechenden Sensorelement der Hochtemperaturbrennstoffzelleneinheit detektiert wird. Durch die erfindungsgemäße Ausgestaltung kann eine vorteilhaft flexible Hochtemperaturbrennstoffzellenvorrichtung bereitgestellt werden. Insbesondere kann eine Hochtemperaturbrennstoffzellenvorrichtung bereitgestellt werden, die einen Brennstoff mit einem beliebigen Mischungsverhältnis von reinem Wasserstoff und einem kohlenwasserstoffhaltigen Brennstoff zu einer Umsetzung durch eine Brennstoffzelleneinheit handhaben kann.

Darüber hinaus wird ein Hochtemperaturbrennstoffzellensystem mit einer erfindungsgemäßen Hochtemperaturbrennstoffzellenvorrichtung und mit zumindest einer Brennstoffzelleneinheit, insbesondere einer Festoxidbrennstoffzelleneinheit, vorgeschlagen. Das Hochtemperaturbrennstoffzellensystem umfasst als Hochtemperaturbrennstoffzellenvorrichtung zumindest den Zufuhrzweig und den Rückführzweig. Vorzugsweise umfasst die Hochtemperaturbrennstoffzellenvorrichtung die Sauerstoffversorgungseinheit und das Steuersystem. Das Hochtemperaturbrennstoffzellensystem umfasst als optionale, in die Hochtemperaturbrennstoffzellenvorrichtung, insbesondere auch nachträglich, integrierbare Zusatzkomponenten die Wasserstofferzeugereinheit und/oder die Brennstoffversorgungseinheit. Die Brennstoffzelleneinheit umfasst insbesondere einen Stromkreis zu einem Abgriff einer elektrischen Spannung zwischen der zumindest einen Sauerstoffelektrode und der zumindest einen Brennstoffelektrode. Durch die erfindungsgemäße Ausgestaltung kann ein vorteilhaft modulares Hochtemperaturbrennstoffzellensystem bereitgestellt werden, das je nach verfügbarem Brennstoff vorteilhaft einfach umgerüstet werden kann und/oder vorteilhaft einen Betriebswechsel vornehmen kann.

Die erfindungsgemäße Hochtemperaturbrennstoffzellenvorrichtung und/oder das erfindungsgemäße Hochtemperaturbrennstoffzellensystem sollen/soll hierbei nicht auf die oben beschriebene Anwendung und Ausführungsform beschränkt sein. Insbesondere kann die erfindungsgemäße Hochtemperaturbrennstoffzelleneinheit und/oder das erfindungsgemäße Hochtemperaturbrennstoffzellensystem zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Hochtemperaturbrennstoffzellensystems,
- Fig. 2: eine schematische Darstellung des erfindungsgemäßen Hochtemperaturbrennstoffzellensystems mit einer Wasserstofferzeugereinheit und
- Fig. 3: eine schematische Darstellung des erfindungsgemäßen Hochtemperaturbrennstoffzellensystems mit einer Kohlenstoffversorgungseinheit.

### Beschreibung des Ausführungsbeispiels

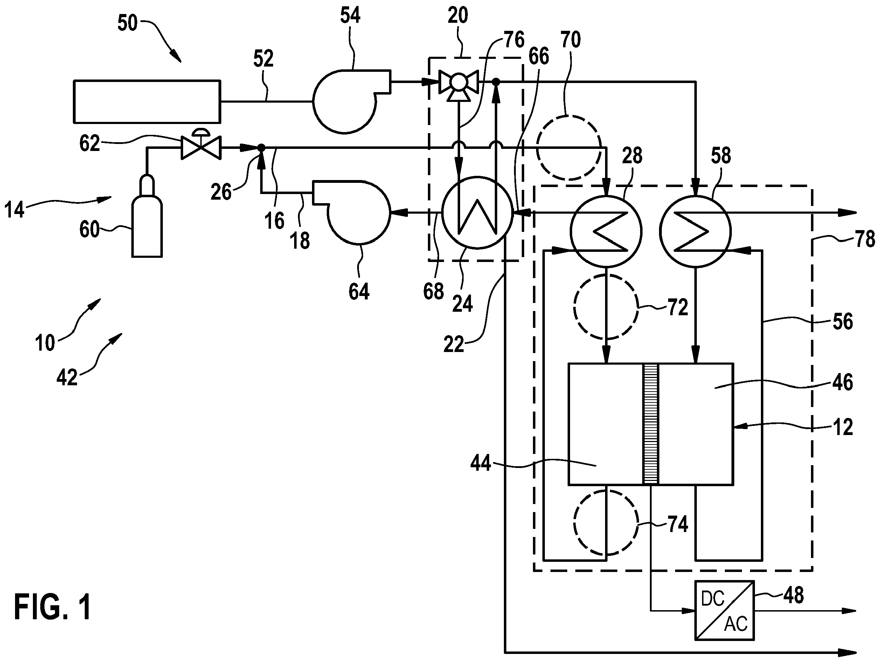

Figur 1 zeigt ein Grundmodell eines Hochtemperaturbrennstoffzellensystems 42. Das Hochtemperaturbrennstoffzellensystem 42 umfasst eine Hochtemperaturbrennstoffzellenvorrichtung 10. Das Hochtemperaturbrennstoffzellensystem 42 umfasst zumindest eine Brennstoffzelleneinheit 12. Vorzugsweise ist die Brennstoffzelleneinheit 12 als Festoxidbrennstoffzelleneinheit ausgebildet. Die Brennstoffzelleneinheit 12 kann fest in die Hochtemperaturbrennstoffzellenvorrichtung 10 integriert sein, insbesondere mittels stoffschlüssiger Verbindungen, oder in die Hochtemperaturbrennstoffzellenvorrichtung 10 zu einem Austausch ein- und auskoppelbar ausgebildet sein, beispielsweise über Steckverbindungen, ein Flanschsystem, Rastverbindungen oder dergleichen. Die Brennstoffzelleneinheit 12 ist hier der Übersicht halber funktional als einzelne Brennstoffzelle dargestellt, kann aber auch eine Vielzahl an Brennstoffzellen umfassen, die fluidtechnisch parallel oder in Reihe geschaltet sind. Die Brennstoffzelleneinheit 12 umfasst zumindest eine Brennstoffelektrode 44 und zumindest eine Sauerstoffelektrode 46, welche insbesondere zu einem Abgriff einer bei einer Umsetzung eines Brennstoffs an den Elektroden anliegenden elektrischen Spannung an einem gemeinsamen Stromkreis der Brennstoffzelleneinheit 12 angeschlossen sind. Vorzugsweise umfasst der Stromkreis einen elektrischen Inverter 48, der an der Sauerstoffelektrode 46 und der Brennstoffelektrode 44 angeschlossen ist. Die Hochtemperaturbrennstoffzellenvorrichtung 10 umfasst zumindest eine Brennstoffversorgungseinheit 14. Die Brennstoffversorgungseinheit 14 ist an der Brennstoffelektrode 44 angeschlossen. Die Hochtemperaturbrennstoffzellenvorrichtung 10 umfasst zumindest eine Sauerstoffversorgungseinheit 50. Die Sauerstoffversorgungseinheit 50 ist an der Sauerstoffelektrode 46 angeschlossen. Vorzugsweise umfasst die Hochtemperaturbrennstoffzellenvorrichtung 10 ein Steuersystem zu einer Steuerung oder Regelung zumindest der Brennstoffversorgungseinheit 14, der Sauerstoffversorgungseinheit 50 und/oder der Brennstoffzelleneinheit 12.

Die Sauerstoffversorgungseinheit 50 umfasst einen Sauerstoffzufuhrzweig 52 zu einer Versorgung der Brennstoffzelleneinheit 12 mit einem sauerstoffhaltigen Fluid, insbesondere Umgebungsluft. Insbesondere umfasst die Sauerstoffversorgungseinheit 50 in dem Sauerstoffzufuhrzweig 52 eine Sauerstofffördereinheit 54, insbesondere einen Ventilator oder Kompressor, zu einem Ansaugen des sauerstoffhaltigen Fluids. Die Sauerstoffversorgungseinheit 50 umfasst am Ende des Sauerstoffzufuhrzweigs 52 einen Sauerstoffanschluss zu einer Übergabe des sauerstoffhaltigen Fluids an die Brennstoffzelleneinheit 12, insbesondere an die Sauerstoffelektrode 46. Die Sauerstoffversorgungseinheit 50 umfasst einen Sauerstoffabgaszweig 56. Die Sauerstoffversorgungseinheit 50 umfasst am Beginn des Sauerstoffabgaszweigs 56 einen Sauerstoffabgasanschluss zu einer Übernahme eines aus der Brennstoffzelleneinheit 12, insbesondere der Sauerstoffelektrode 46, strömenden Abgases. Vorzugsweise umfasst die Sauerstoffversorgungseinheit 50 einen Sauerstoffwärmeübertrager 58 zu einer Wärmerückgewinnung von dem Abgas in dem Sauerstoffabgaszweig 56 und insbesondere einer Übertragung auf das sauerstoffhaltige Fluid in dem Sauerstoffzufuhrzweig 52. Insbesondere ist der Sauerstoffwärmeübertrager 58 in dem Sauerstoffzufuhrzweig 52 stromabwärts der Sauerstofffördereinheit 54 und insbesondere stromaufwärts des Sauerstoffanschlusses angeordnet. Insbesondere ist der Sauerstoffwärmeübertrager 58 in dem Sauerstoffabgaszweig 56 stromabwärts des Sauerstoffabgasanschlusses angeordnet. Vorzugsweise umfasst die Hochtemperaturbrennstoffzellenvorrichtung 10 eine wärmeisolierende Aufnahmeeinheit 78. Insbesondere sind die Brennstoffzelleneinheit 12 und der Sauerstoffwärmeübertrager 58 in der Aufnahmeeinheit 78 angeordnet.

Die Brennstoffversorgungseinheit 14 umfasst einen Zufuhrzweig 16 zu einer Versorgung der Brennstoffzelleneinheit 12 mit dem Brennstoff. Die Brennstoffversorgungseinheit 14, insbesondere der Zufuhrzweig 16, ist an eine Brennstoffquelle 60 angeschlossen, hier als unter Druck stehender Lagerbehälter abgebildet. Vorzugsweise umfasst die Brennstoffversorgungseinheit 14 in dem Zufuhrzweig 16 zumindest ein Dosierelement 62 zu einer Einstellung eines Volumenstroms des Brennstoffs aus der Brennstoffquelle 60. Beispielsweise ist das Dosierelement 62 wie hier gezeigt als Dosierventil ausgebildet. Alternativ ist das Dosierelement 62 als Zufuhrfördereinheit, insbesondere Kompressor oder Ventilator, ausgebildet.

Die Brennstoffversorgungseinheit 14 umfasst zumindest einen in den Zufuhrzweig 16 mündenden Rückführzweig 18 zu einer Rückspeisung eines aus der Brennstoffzelleneinheit 12 austretenden Brennstoffrests. Der Rückführzweig 18 ist insbesondere an dem Abgasanschluss angeschlossen. Der Rückführzweig 18 weist eine Mündungsstelle 26 auf, an welcher er in den Zufuhrzweig 16 mündet. Vorzugsweise ist die Mündungsstelle 26 stromabwärts des Dosierelements 62 angeordnet. Die Brennstoffversorgungseinheit 14 umfasst insbesondere eine in dem Rückführzweig 18 angeordnete Rückführfördereinheit 64 zu einer Einstellung eines Volumenstroms durch den Rückführzweig 18. Der Zufuhrzweig 16 und der Rückführzweig 18 bilden einen Brennstoffkreislauf. Die Brennstoffversorgungseinheit 14 weist vorzugsweise einen brennstoffkreislaufinternen Wärmeübertrager 28 auf. Der brennstoffkreislaufinterne Wärmeübertrager 28 ist zu einer Wärmeübertragung von dem Rückführzweig 18 auf den Zufuhrzweig 16 in dem Rückführzweig 18 und in dem Zufuhrzweig 16 angeordnet. Vorzugsweise ist der brennstoffkreislaufinterne Wärmeübertrager 28 in der Aufnahmeeinheit 78 angeordnet.

Die Brennstoffversorgungseinheit 14 umfasst eine Flüssigkeitsabscheidereinheit 20 zu einer Abscheidung einer Flüssigkeit aus dem Brennstoff. Die Flüssigkeitsabscheidereinheit 20 ist in den Brennstoffkreislauf eingebunden. Die Flüssigkeitsabscheidereinheit 20 weist zumindest einen Einlass 66 auf. Die Flüssigkeitsabscheidereinheit 20 weist zumindest einen Gasauslass 68 auf. Der Einlass 66 und der Gasauslass 68 sind insbesondere Teil des Brennstoffkreislaufs. Die Flüssigkeitsabscheidereinheit 20 weist zumindest einen Flüssigkeitsauslass 22 auf. Der Flüssigkeitsauslass 22 der Flüssigkeitsabscheidereinheit 20 bildet einen Auslass aus dem Brennstoffkreislauf. In zumindest einem aktiven Betriebszustand der Brennstoffversorgungseinheit 14 bildet der zumindest eine Flüssigkeitsauslass 22 der Flüssigkeitsabscheidereinheit 20 den einzigen Auslass aus dem Brennstoffkreislauf. Insbesondere ist der Flüssigkeitsauslass 22 zu einem Auslass des Umsetzungsprodukts aus dem Brennstoffkreislauf vorgesehen. Insbesondere ist der Flüssigkeitsauslass 22 bei einer Umsetzung von Wasserstoff zu einem Auslass von Wasser aus dem Brennstoffkreislauf vorgesehen.

Die Flüssigkeitsabscheidereinheit 20 umfasst in dem Brennstoffkreislauf zumindest einen betriebsfluidgekühlten Wärmeübertrager 24. Die Flüssigkeitsabscheidereinheit 20 ist zwischen der Mündungsstelle 26 des Rückführzweigs 18 in den Zufuhrzweig 16 und dem brennstoffkreislaufinternen Wärmeübertrager 28, insbesondere außerhalb der Aufnahmeeinheit 78, in den Brennstoffkreislauf eingebunden. Vorzugsweise ist die Flüssigkeitsabscheidereinheit 20, insbesondere der Wärmeübertrager 24, in dem Rückführzweig 18, insbesondere stromaufwärts der Rückführfördereinheit 64, angeordnet. Alternativ ist der Wärmeübertrager 24 oder zusätzlich ein weiterer Wärmeübertrager der Flüssigkeitsabscheidereinheit 20 an einer Alternativposition 70 in dem Zufuhrzweig 16, insbesondere stromabwärts der Mündungsstelle 26 und stromaufwärts des brennstoffkreislaufinternen Wärmeübertragers 28, angeordnet. Alternativ ist die Flüssigkeitsabscheidereinheit 20 oder zusätzlich ein weiterer Wärmeübertrager der Flüssigkeitsabscheidereinheit 20 an einer Alternativposition 72, 74 zwischen dem brennstoffkreislaufinternen Wärmeübertrager 28 der Brennstoffversorgungseinheit 14 und dem Brennstoffanschluss und/oder dem Abgasanschluss in den Brennstoffkreislauf eingebunden. Ein Kältekanal des Wärmeübertragers 24 zu einer Kühlung des Brennstoffs und/oder des Abgases ist an den Sauerstoffzufuhrzweig 52 angeschlossen, insbesondere über einen Bypass 76 der Sauerstoffversorgungseinheit 50, dessen Durchströmung beispielsweise über ein, insbesondere kontinuierliches, 3-Wegeventil einstellbar ist.

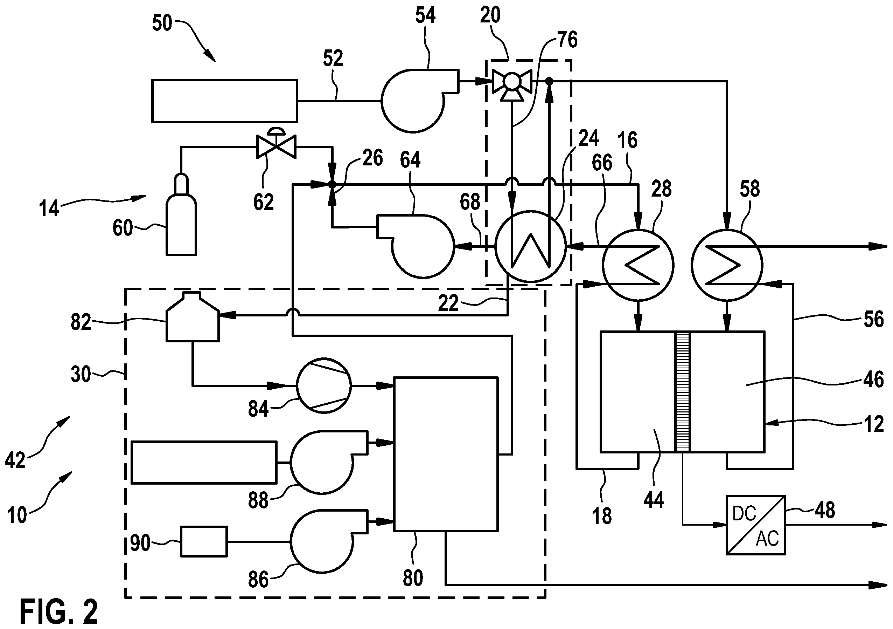

Figur 2 zeigt das in Figur 1 gezeigte Grundmodell der Hochtemperaturbrennstoffzellenvorrichtung 10 mit einer kohlenwasserstoffbetriebenen Wasserstofferzeugereinheit 30 als, insbesondere nachträglich einkoppelbares, Zusatzmodul. Die Hochtemperaturbrennstoffzellenvorrichtung 10 umfasst die kohlenwasserstoffbetriebene Wasserstofferzeugereinheit 30 zu einer Einspeisung von Wasserstoff in den Brennstoffkreislauf. Die Wasserstofferzeugereinheit 30 umfasst insbesondere zumindest einen Wasserstofferzeuger 80 zu einem Dampfreformieren eines Kohlenwasserstoffs oder eines Kohlenwasserstoffgemischs. Der Flüssigkeitsauslass 22 der Flüssigkeitsabscheidereinheit 20 ist an die Wasserstofferzeugereinheit 30 angeschlossen. Insbesondere umfasst die Wasserstofferzeugereinheit 30 einen Sammelbehälter 82, welcher an dem Flüssigkeitsauslass 22 angeschlossen ist. Die Wasserstofferzeugereinheit 30 umfasst vorzugsweise eine Wasserfördereinheit 84, insbesondere eine Pumpe, zu einer Förderung des Wassers von dem Flüssigkeitsauslass 22, insbesondere von dem Sammelbehälter 82, zu dem Wasserstofferzeuger 80. Die Wasserstofferzeugereinheit 30 umfasst eine Brennstofffördereinheit 86, insbesondere einen Kompressor oder einen Ventilator, zu einer Versorgung des Wasserstofferzeugers 80 mit dem Kohlenwasserstoff oder dem Kohlenwasserstoffgemisch, insbesondere Erdgas, aus einer weiteren Brennstoffquelle 90. Die Wasserstofferzeugereinheit 30 umfasst zumindest eine Luftfördereinheit 88, insbesondere einen Kompressor oder einen Ventilator, zu einer Versorgung des Wasserstofferzeugers 80 mit Umgebungsluft. Der Wasserstofferzeuger 80 ist dazu vorgesehen, den Kohlenwasserstoff oder das Kohlenwasserstoffgemisch und Wassermittels Dampfreformierung in Wasserstoff umzusetzen. Ein Auslass des Wasserstofferzeugers 80 ist an den Zufuhrzweig 16 angeschlossen, insbesondere zu einer Einspeisung des gewonnenen Wasserstoffs.

Die Hochtemperaturbrennstoffzellenvorrichtung 10 umfasst zumindest einen Wasserstoffbetrieb, insbesondere zu einer ausschließlichen Nutzung von Wasserstoff der Brennstoffquelle 60 als Energieträger. Die Hochtemperaturbrennstoffzellenvorrichtung 10 umfasst zumindest einen Kohlenwasserstoffbetrieb, insbesondere zu einer ausschließlichen Nutzung des Kohlenwasserstoffs und/oder des Kohlenwasserstoffgemischs der weiteren Brennstoffquelle 90 als Energieträger. Die Hochtemperaturbrennstoffzellenvorrichtung 10 umfasst eine Stelleinheit zu einem, insbesondere kontinuierlichen, Wechsel zwischen dem Wasserstoffbetrieb und dem Kohlenwasserstoffbetrieb. Die Stelleinheit umfasst beispielsweise das Dosierelement 62, die Wasserfördereinheit 84, die Luftfördereinheit 88 und die Brennstofffördereinheit 86. Insbesondere umfasst die Hochtemperaturbrennstoffzellenvorrichtung 10 einen Mischbetrieb zu einer Umsetzung eines Gemischs aus dem Wasserstoff der Brennstoffquelle 60 und dem mittels des Kohlenwasserstoffs und/oder des Kohlenwasserstoffgemischs hergestellten Wasserstoffs der Wasserstofferzeugereinheit 30.

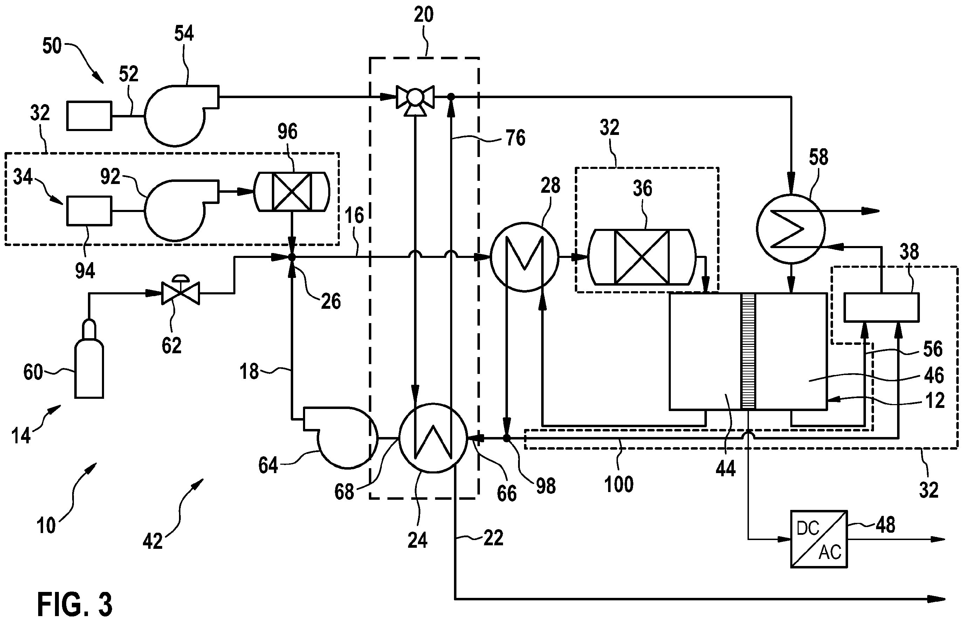

Figur 3 zeigt das in Figur 1 gezeigte Grundmodell der Hochtemperaturbrennstoffzellenvorrichtung 10 mit einer Kohlenwasserstoffversorgungseinheit 32 als, insbesondere nachträglich einkoppelbares, Zusatzmodul. Die Kohlenwasserstoffversorgungseinheit 32 kann zusätzlich oder alternativ zu der Wasserstofferzeugereinheit 30 in das Grundmodell eingekoppelt werden, wobei der Übersichtlichkeit halber die Wasserstofferzeugereinheit 30 hier nicht gezeigt ist. Die Hochtemperaturbrennstoffzellenvorrichtung 10 umfasst die Kohlenwasserstoffversorgungseinheit 32 insbesondere zu einer Direkteinspeisung zumindest eines Kohlenwasserstoffs, insbesondere Erdgas, aus einer zusätzlichen Brennstoffquelle 94 in den Zufuhrzweig 16. Die Kohlenwasserstoffversorgungseinheit 32 ist, beispielsweise über ein Flanschsystem, mittels Sperrventilen oder dergleichen, in den Brennstoffkreislauf ein- und auskoppelbar ausgebildet. Die Kohlenwasserstoffversorgungseinheit 32 umfasst zumindest eine Einspeiseeinheit 34. Die Einspeiseeinheit 34 umfasst vorzugsweise eine weitere Brennstofffördereinheit 92 zu einer Förderung des zumindest einen Kohlenwasserstoffs der zusätzlichen Brennstoffquelle 94 in den Zufuhrzweig 16. Optional umfasst die Einspeiseeinheit 34 einen stromabwärts der weiteren Brennstofffördereinheit 92 angeordneten Entschwefler 96. Die Kohlenwasserstoffversorgungseinheit 32 umfasst zumindest einen Reformer 36. Der Reformer 36 ist bevorzugt zwischen dem brennstoffinternen Wärmeübertrager 28 und dem Brennstoffanschluss in den Zufuhrzweig 16 eingekoppelt. Zumindest in einem aktiven Kohlenwasserstoffbetriebszustand der Brennstoffversorgungseinheit 14 weist der Brennstoffkreislauf zumindest einen weiteren Auslass auf, der von dem Flüssigkeitsauslass 22 der Flüssigkeitsabscheidereinheit 20 separat ausgebildet ist. Der Rückführzweig 18 umfasst eine Verzweigung 98, an welcher ein Abgaszweig 100 den weiteren Auslass aus dem Brennstoffkreislauf bildet. Die Verzweigung 98 ist vorzugsweise stromabwärts des brennstoffkreislaufinternen Wärmeübertragers 28 und stromaufwärts der Rückführfördereinheit 64 angeordnet. Vorzugsweise ist der Abgaszweig 100, beispielsweise mit einem Sperrventil, verschließbar ausgebildet, so dass der Rückführzweig 18 während des Wasserstoffbetriebs verzweigungsfrei ausgebildet ist und insbesondere der Flüssigkeitsauslass 22 den einzigen Auslass aus dem Brennstoffkreislauf bildet. Die Kohlenwasserstoffversorgungseinheit 32 umfasst zumindest einen Nachbrenner 38. Der Nachbrenner 38 ist an dem Abgaszweig 100 angeschlossen und in den Sauerstoffabgaszweig 56 eingekoppelt.

Vorzugsweise ist der Nachbrenner 38 stromabwärts des Sauerstoffwärmeübertragers 58 in den Sauerstoffabgaszweig 56 eingekoppelt.

Die Hochtemperaturbrennstoffzellenvorrichtung 10 umfasst insbesondere einen weiteren Kohlenstoffbetrieb, bei dem die Brennstoffzelleneinheit 12 direkt mit dem zumindest einem Kohlenwasserstoff versorgt wird. Insbesondere umfasst die Hochtemperaturbrennstoffzellenvorrichtung 10 einen weiteren Mischbetrieb, bei welchem die Brennstoffzelleneinheit 12 mit einem Gemisch aus Wasserstoff der Brennstoffquelle 60 und dem zumindest einem Kohlenwasserstoff der zusätzlichen Brennstoffquelle 94, insbesondere in einem frei wählbaren Mischverhältnis, versorgt wird.

## Patentansprüche

1. Hochtemperaturbrennstoffzellenvorrichtung zu einem Betrieb zumindest einer Brennstoffzelleneinheit (12), insbesondere einer Festoxidbrennstoffzelleneinheit, mit zumindest einer Brennstoffversorgungseinheit (14), welche zumindest einen Zufuhrzweig (16) zu einer Versorgung der Brennstoffzelleneinheit (12) mit einem Brennstoff umfasst, welche zumindest einen in den Zufuhrzweig (16) mündenden Rückführzweig (18) zu einer Rückspeisung eines aus der Brennstoffzelleneinheit (12) austretenden Brennstoffrests umfasst und welche eine Flüssigkeitsabscheidereinheit (20) zu einer Abscheidung einer Flüssigkeit aus dem Brennstoff umfasst, **dadurch gekennzeichnet, dass** die Flüssigkeitsabscheidereinheit (20) in einem von dem Zufuhrzweig (16) und dem Rückführzweig (18) gebildeten Brennstoffkreislauf eingebunden ist, wobei ein Flüssigkeitsauslass (22) der Flüssigkeitsabscheidereinheit (20) einen Auslass aus dem Brennstoffkreislauf bildet.

2. Hochtemperaturbrennstoffzellenvorrichtung nach Anspruch 1, **dadurch gekennzeichnet, dass** in zumindest einem aktiven Betriebszustand der Brennstoffversorgungseinheit (14) der zumindest eine Flüssigkeitsauslass (22) der Flüssigkeitsabscheidereinheit (20) den einzigen Auslass aus dem Brennstoffkreislauf bildet.

3. Hochtemperaturbrennstoffzellenvorrichtung nach Anspruch 1 oder 2, **dadurch gekennzeichnet, dass** die Flüssigkeitsabscheidereinheit (20) in dem Brennstoffkreislauf zumindest einen betriebsfluidgekühlten Wärmeübertrager (24) umfasst.

4. Hochtemperaturbrennstoffzellenvorrichtung nach einem der vorhergehenden Ansprüche, **dadurch gekennzeichnet, dass** die Flüssigkeitsabscheidereinheit (20) zwischen einer Mündungsstelle (26) des Rückführzweigs (18) in den Zufuhrzweig (16) und einem brennstoffkreislaufinternen Wärmeübertrager (28) in den Brennstoffkreislauf eingebunden ist.

5. Hochtemperaturbrennstoffzellenvorrichtung nach einem der Ansprüche 1 bis 3, **dadurch gekennzeichnet, dass** die Flüssigkeitsabscheidereinheit (20) zwischen einem brennstoffkreislaufinternen Wärmeübertrager (28) der Brennstoffversorgungseinheit (14) und einem Anschluss zu einer Einbindung der Brennstoffzelleneinheit (12) in den Brennstoffkreislauf eingebunden ist.

6. Hochtemperaturbrennstoffzellenvorrichtung nach einem der vorhergehenden Ansprüche, **gekennzeichnet, durch** eine kohlenwasserstoffbetriebene Wasserstofferzeugereinheit (30) zu einer Einspeisung von Wasserstoff in den Brennstoffkreislauf.

7. Hochtemperaturbrennstoffzellenvorrichtung nach Anspruch 6, **dadurch gekennzeichnet, dass** der Flüssigkeitsauslass (22) der Flüssigkeitsabscheidereinheit (20) an die Wasserstofferzeugereinheit (30) angeschlossen ist.

8. Hochtemperaturbrennstoffzellenvorrichtung nach einem der vorhergehenden Ansprüche, **gekennzeichnet durch** eine Kohlenwasserstoffversorgungseinheit (32), welche in den Brennstoffkreislauf ein- und auskoppelbar ausgebildet ist und welche zumindest eine Einspeiseeinheit (34), einen Reformer (36) und einen Nachbrenner (38) umfasst.

9. Hochtemperaturbrennstoffzellenvorrichtung nach Anspruch 8, **dadurch gekennzeichnet, dass** in zumindest einem aktiven Kohlenwasserstoffbetriebszustand der Brennstoffversorgungseinheit (14) der Brennstoffkreislauf zumindest einen weiteren Auslass aufweist, der von dem Flüssigkeitsauslass (22) der Flüssigkeitsabscheidereinheit (20) separat ausgebildet ist.

10. Hochtemperaturbrennstoffzellenvorrichtung nach einem der vorhergehenden Ansprüche, **gekennzeichnet durch** zumindest einen Wasserstoffbetrieb, zumindest einen Kohlenwasserstoffbetrieb und eine Stelleinheit zu einem, insbesondere kontinuierlichen, Wechsel zwischen dem Wasserstoffbetrieb und dem Kohlenwasserstoffbetrieb.

11. Hochtemperaturbrennstoffzellensystem mit einer Hochtemperaturbrennstoffzellenvorrichtung nach einem der vorhergehenden Ansprüche und mit zumindest einer Brennstoffzelleneinheit (12), insbesondere Festoxidbrennstoffzelleneinheit.
